(19) Europäisches Patentamt
European Patent Office
Office européen des brevets

(11) **EP 3 110 984 B1**

(12) **EUROPEAN PATENT SPECIFICATION**

(45) Date of publication and mention of the grant of the patent:
**24.04.2019 Bulletin 2019/17**

(51) Int Cl.:
***C22C 38/00*** (2006.01)   ***C22C 38/42*** (2006.01)
***C22C 38/44*** (2006.01)   ***C22C 38/58*** (2006.01)

(21) Application number: **15713827.2**

(22) Date of filing: **25.02.2015**

(86) International application number:
**PCT/BR2015/050016**

(87) International publication number:
**WO 2015/127523 (03.09.2015 Gazette 2015/35)**

(54) **MARTENSITIC-FERRITIC STAINLESS STEEL, MANUFACTURED PRODUCT AND PROCESSES USING THE SAME**

MARTENSITISCHER-FERRITISCHER ROSTFREIER STAHL, HERGESTELLTES PRODUKT UND VERFAHREN ZUR VERWENDUNG DAVON

ACIER INOXYDABLE MARTENSITIQUE-FERRITIQUE ET PRODUIT MANUFACTURÉ ET PROCÉDÉS L' UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2014 BR 1405015**

(43) Date of publication of application:
**04.01.2017 Bulletin 2017/01**

(73) Proprietor: **Vallourec Soluções Tubulares do Brasil S.A.**
**Belo Horizonte MG (BR)**

(72) Inventors:
• **DE CARVALHO, Ricardo Nolasco**
  **30380-410 Belo Horizonte - MG (BR)**
• **FERREIRA, Marcelo Almeida Cunha**
  **34000-000 Nova Lima - MG (BR)**
• **DE LIMA, Marília Mendonça**
  **30380-600 Belo Horizonte - MG (BR)**
• **MESQUITA, Rafael Agnelli**
  **13479-780 Americana - SP (BR)**
• **FARINA, Alexandre Bellegard**
  **13141-023 Paulinia - SP (BR)**
• **LIBERTO, Rodrigo Cesar Nascimento**
  **13340-350 Indaiatuba - SP (BR)**

(74) Representative: **Casalonga**
**Casalonga & Partners**
**Bayerstraße 71/73**
**80335 München (DE)**

(56) References cited:
**EP-A1- 0 565 117        EP-A1- 0 649 915**
**WO-A1-2013/161089       JP-A- H08 246 107**
**JP-A- H09 125 141        JP-A- 2001 179 485**

Description

TECHNICAL FIELD

The present invention relates to a martensitic-ferritic stainless steel used in the manufacture of steel products, such as tubings and casings, among others, for applications in the oil and gas industry, wherein high mechanical strength (flow limit usually greater than 655 MPa (95 ksi)) and tenacity is required, in combination with a superior corrosion resistance.

BACKGROUND

With the discovery of new oil fields, especially the ones under thick salt layers, the environments of the wells for oil and natural gas are pushing the operational conditions beyond the existing knowledge. Pressures of $CO_2$ that usually ranged below 5 MPa (50 bar) are easily surpassed, being able to achieve values well over 20 MPa (200 bar).

These new operating conditions, coupled with others contaminants such as hydrogen sulphide ($H_2S$), different bicarbonate content and lower pH values increases the severity of the corrosion conditions of the wells well over the classically values reported and used in actual predictions models. Usually the prediction models are based on statistics, field observations and chemical composition, represented by the Pitting Resistance Equivalent Number (PREN), calculated by the equation PREN=%Cr+3.3%Mo+16%N).

NACE MR0175 and ISO 15156 standards provide guidance for selection of Corrosion Resistant Alloys (CRA) based on application (equipment or component), materials group comprising manufacturing process and PREN and finally on environmental parameters such as temperature, $H_2S$ partial pressure, Cl⁻ contents and pH.

In the past, 13Cr martensitic stainless steels (0.2% C and 13% Cr) were often selected to applications in wells containing high levels of $CO_2$. Afterwards, with the increase of $H_2S$ contents, the supermartensitic stainless steel class, containing low C contents, about 13% Cr and additions of Ni and Mo, was developed and its application was increased. The supermartensitic stainless steels have a fully martensitic microstructure, hardened by quenching and tempering, supplied with flow limit between 95 and 140 ksi. The patents US 5,496,421 and US 5,944,921, are good examples of this stage of development for this class of CRA.

The US 5,496,421 has proposed a martensitic stainless steel that presents a very fine dispersion of copper precipitates in a martensitic matrix. Through this precipitation, the flow limit is improved without degeneration of the tenacity. However, the hot ductility is much reduced for the high temperatures demanded for the conformation of seamless tubes by Mannesmann process. The US 5,944,921 proposed a supermartensitic stainless steel that presents high mechanical and corrosion resistance and PREN higher than 19.

The above proposed steels present a fully martensitic microstructure, being usually accepted unavoidable residual amounts of δ ferrite and retained austenite.

However, it is worth to note that the recent oil reserves contain large amounts of $H_2S$, enabling the occurrence of sulphide stress corrosion cracking (SSC) in the steels employed. The application of supermartensitic stainless steels (Super 13Cr) reach, currently, its limit due to this failure mechanism and, according to the existing knowledge and models, the use of duplex and superduplex stainless steels is inevitable.

Duplex stainless steels present an austenitic-ferritic structure and a desired corrosion resistance for this application. However, it is not able to be hardened by conventional quenching and tempering heat treatments. In order to reach higher mechanical properties, this kind of steel must be cold worked, increasing the complexity and processing costs.

Besides, duplex and superduplex stainless steels present a very complex processing and high amount of alloying elements. For these reasons, the cost for this class of steel is much higher when compared with supermartensitic stainless steels.

In order to overcame these difficulties, some researchers proposed modifications on supermartensitic stainless steels aiming to improve its corrosion resistance and, consequently, expand its field of application, as for example, the documents US 7,662,244, US 7,361,236, US 8,157,930, US 2008/0213120, US 7,767,039 and US 2009/0162239. It is worth highlighting that, being supermartensitic stainless steels, the microstructure is exclusively martensitic with residual amounts of δ ferrite and retained austenite. Another important point is that none of those steels were developed for applications in environments with very low pH and high $CO_2$ contents.

These steels present a corrosion resistance quite similar to the supermartensitic stainless steel, Super 13Cr and, therefore, its field of application is not so different from traditional supermartensitic of the state of the art.

In this way, even with modifications in its composition, the supermartensitic stainless steel class presents clearly a limit in terms of corrosion resistance in oil and gas fields containing higher carbon dioxide ($CO_2$) partial pressure and low pH, combined with a small amount of hydrogen sulfide ($H_2S$) and higher Chloride (Cl⁻) concentration.

To develop steel with better corrosion resistance and, consequently, avoid selecting a duplex stainless steel, martensitic-ferritic stainless steels have been recently proposed.

Thanks to a suitable amount of martensite, this new class of stainless steel presents good mechanical resistance without any cold working processing, as required for duplex stainless steel. In this martensitic-ferritic stainless steel, the hardening mechanism is based on microstructural characteristics originated in the phase transformations during the cooling to room temperature. Martensitic transformation and carbides and nitrides precipitation are usually the hardening mechanisms adopted. The martensite transformation depends, basically, of austenite stability at room temperature and, consequently, of its chemical composition.

This class of stainless steel, designed to have a martensitic-ferritic microstructure has, as examples, the documents: US 7,767,037, US 7,862,666, US 2011 /0014083, US 2011/0226378 and US 2012/0031530.

The US 7,767,037 proposed steel for use in oil well pipes having a flow limit of at least 654MPa and corrosion resistance to environments with high $CO_2$ pressure and temperature up to 230ºC. The steel contains from 15.5 to 18.0% Cr and presents a parameter called "Crack Length", based on the chemical composition that measures the hot ductility. According to the authors, a good hot ductility is obtained when this parameter is higher than 11.5. The "crack length" parameter is strongly related to the amount of ferrite. That means that, when this parameter is higher than 11.5, the amount of ferrite is higher than 10% and the material returns to have good hot ductility. The authors also present a parameter that evaluates, through the chemical composition, the uniform corrosion rate. The test used to evaluate the corrosion resistance was an immersion test in an autoclave with 5 MPa of $CO_2$, 230ºC and 20% of NaCl. After the test, the samples were weighted and the corrosion rate was calculated, allowing a correlation between corrosion rate and the corrosion parameter. According to the authors, a good corrosion resistance (less than 0.5 mm/year) is attained when this corrosion parameter is found to be higher than 18.5. The alloy is then designed based on these two parameters. No investigation was done on sulfide stress cracking (SSC) resistance to this material.

The US 7,862,666, proposed a stainless steel with high mechanical strength and high corrosion resistance for pipes. This stainless steel contains from 15 to 18% Cr, in weight %, and presents martensite as a primary phase, 10% to 60% of ferrite and 30% or less of austenite phase. This steel is similar to that presented by US 7,767,037 but, once it was aiming pipe applications, interstitials elements were limited to C+N $\leq$ 0.025 in order to improve the weldability. The same parameters presented by US 7,767,037, such as the "crack length" and the corrosion parameters, were used herein. Additionally it was investigated the corrosion resistance of welded joints, in which was evaluated the uniform and localized corrosion by immersion of samples in an aqueous solution of 20% NaCl (200°C of temperature and $CO_2$ atmosphere under 50 ATM of pressure) in an autoclave for a period of 2 weeks. After the test, the corrosion rate was calculated by weighting the samples and pitting occurrence was observed. It was also evaluated the sulfide stress cracking (SSC) resistance on welded joints, through the NACE-TM0177 Method A, wherein it was used a 20% NaCl aqueous solution, pH of 4.0 and $H_2S$ partial pressure of 0.005 MPa. The test was conducted applying 90% of flow limit of the base material for a period of 720 hours. Once the steel was developed for pipes, a flow limit higher than 413 MPa (60 ksi) is considered a high value. However, for oil and gas well applications, flow limit higher than 655 MPa (95ksi) is desirable.

The US 2011/0014083 proposed a new stainless steel for oil and gas well application in environments containing $Cl^-$ aqueous solution with high $CO_2$ partial pressure and high temperature. The stainless steel contains from 16 to 18% by weight of Cr. According to the authors, rare earth metals (such as Nd, Y, Ce, La and others) can improve the SSC resistance if added to the steel in amounts varying from 0.001 to 0.3%. It was also used Cu in order to improve SSC resistance. The amount of Mo is preferably higher than 2% (to improve pitting resistance) but less than 4% (to avoid excessive ferrite formation and consequently low mechanical strength). The proposed steel is intended for flow limit higher than 654 MPa and presents a volumetric fraction of ferrite of about 10 to 60% and austenite from about 2 to 10%, the remainder being martensite.

The US 2011/0226378 proposed a high mechanical strength stainless steel for application as pipe for oil and gas well application. According to the authors, the amount of Mn and N shall be limited in order to control the mechanical properties. The proposed chemical composition is quite similar with that in US 2011/0014083, but with lower carbon content and slightly higher copper content. Besides these modifications, the corrosion resistance is also very close to that obtained by the stainless steel of US 2011/0014083.

The US 2012/0031530 proposed a stainless steel pipe for oil and gas well application having high mechanical strength (flow limit higher than 758 MPa) and excellent SSC resistance at high-temperature. This steel has also others specific combinations of some elements such as Cr, Cu, Ni, Mo, C, N and Mn. According to the authors, in order to avoid SSC cracks at high temperature, the microstructure has to present martensite, a volume ratio of 10 to 40% of ferrite and a ferritic phase distribution ratio higher than 85%. This distribution ratio measures the continuity of ferrite phase close to the surface of the material and such continuity should be responsible for stopping a SSC cracking propagation.

As it can be seen in all the martensitic-ferritic steels previously presented US 7,767,037, US 7,862,666, US 2011/0014083, US 2011/0226378 and US 2012/0031530, there is a clear option for a steel design having higher Cr content, specifically higher than 15% of Cr, in addition to Mo between 2.0 and 2.5% and, in some cases, Cu higher than 2.0%. The higher Cr content compared to supermartensitic stainless steel has, as a side effect, a stronger tendency to form deleterious phases, such as α' or Sigma phase, during tempering process at temperatures between 400 and 600°C or during air cooling from tempering temperatures above this range.

Document WO 2013/161089 discloses a Cr-containing steel pipe for a linepipe. The steel pipe has a composition which contains, in mass%, 0.001 to 0.015% of C, 0.05 to 0.50% of Si, 0.10 to 2.0% of Mn, 0.001 to 0.10% of Al, 13 to less than 15% of Cr, 2.0 to 5.0% of Ni, 1.5 to 3.5% of Mo, 0.001 to 0.20% of V, and up to 0.015% of N.

The technological evolution on stainless steels shows that, for the technical field of oil and gas wells, there was a demand for steel with higher corrosion resistance than the martensitic steels, at the same time cheaper than duplex steels and also presenting smaller amounts of deleterious phases.

## SUMMARY

The present invention discloses a martensitic-ferritic stainless steel that comprises a martensitic-ferritic microstructure, and a chemical composition in the range of C: from 0,005 to 0,030%; Si: from 0.10 to 0.40%; Mn from 0,20 to 0,80%; P: 0,020% max; S: 0,005% max; Cr: from 13 to 15%; Ni: from 4,0 to 6,0%; Mo: from 2,0 to 4,5%; V: from 0,01 to 0,10%; Nb: from 0,01 to 0,50%; N: from 0,001 to 0,070%; Al: from 0,001 to 0,060%; Ti: from 0,001 to 0,050%-; Cu: from 0,01 to 1,50%; W: below 0.05%; 0.005% max max (in weight %), wherein the balance is performed by Fe and unavoidable impurities from industrial processing in acceptable levels; up to a maximum of 0.20% in total amount and having a Localized Corrosion Parameter (LCP) between 3.2 and 6.2, defined by equation below:

$$LCP = 0.500 \cdot \%Cr + 1.287 \cdot \%Mo + 1.308 \cdot \%N - 5.984.$$

The present invention discloses about a manufacture product, for oil and gas application, that comprises the martensitic-ferritic stainless steel of the present invention, having a final fine microstructure composed by δ ferrite, martensite, retained austenite and worthless amount of deleterious phases, such as Chi or Sigma; wherein the amount of δ ferrite ranges from 20 to 50%, the amount of martensite ranges from 50 to 80% and have no more than 15% of retained austenite.

Another embodiment of the present invention is the process for production of forged or rolled parts or bars of martensitic-ferritic stainless steel that comprises the following steps:

a) production of martensitic-ferritic stainless steel, as defined in one of claims 1 to 13, by melting the chemical elements;
b) casting of material melted in step a);
c) homogenization of the ingot of step b) by heat treatment;
d) hot conformation of the product of step c) by rolling or forging, wherein the processing temperature at the end of this step shall follow the equation bellow:

$$T_{Proc} - 16.9 * \%Cr - 49.9 * \%Mo > 535;$$

e) optionally, heat treat the product of step d);

Additionally, the present invention has as goal a process for production of seamless tube of martensitic-ferritic stainless steel, comprising the following steps:

a) rolling of the tube that comprises the martensitic-ferritic stainless steel, as defined in one of claims 1 to 13, followed by a heat treatment, wherein the heating temperature for the finishing steps shall follow the equation below:

$$T_{Proc} - 16.9 * \%Cr - 49.9 * \%Mo > 535;$$

b) heat treatment, divided in the following sub steps
b1) optionally quenching, and, when used, shall follow the heating temperature equation of step a);
b2) single or double tempering, comprising temperatures between 550 and 680°C, directly after rolling or after a thermal cycle of quenching; and
c) air or water cooling, after quenching or tempering.

## BRIEF DESCRIPTION OF THE DRAWINGS

**Fig. 1** shows a microstructure of a martensitic-ferritic stainless steel, taking as example the microstructure of steel G.

**Fig. 2** shows polarization curves on steel A, for two different processing routes: single and double tempering.

**Fig. 3** shows a crack nucleated under a pit, located at the surface of the steel A (martensitic stainless steel) after test by NACE TM0177-96 Method A, in environment 2.

**Fig. 4** shows a pit nucleated on the surface of the steel H (martensitic-ferritic stainless steel), test by NACE TM0177-96 Method A, in environment 2.

**Fig. 5** shows a correlation between the corrosion parameter (LCP) and the crevice potential.

**Fig. 6** shows a correlation between the corrosion parameter (LCP) and the result of the NACE TM 0177 Method A test.

**Fig. 7** shows the correlation between electrochemical and NACE TM 0177 Method A tests.

## DETAILED DESCRIPTION

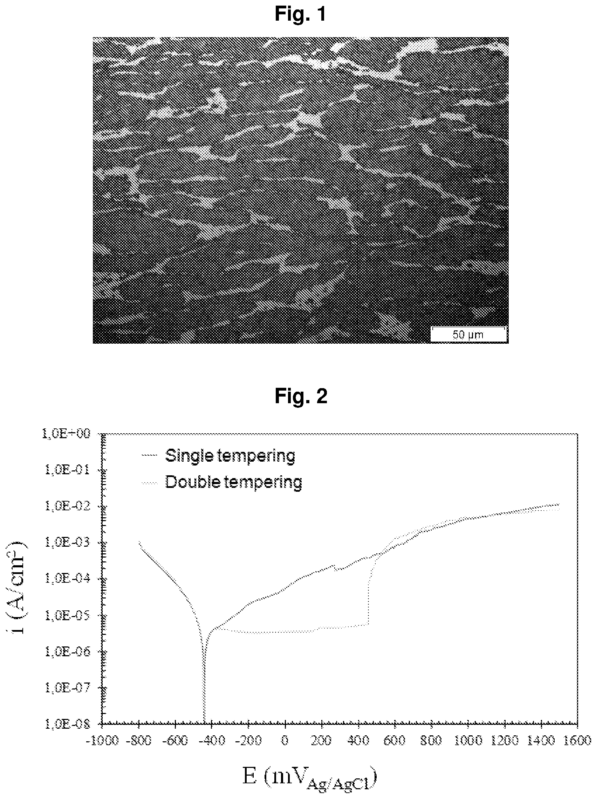

The present invention discloses about a martensitic-ferritic stainless steel with a microstructure composed by a martensitic matrix with high contents of delta ferrite and some retained austenite, as shown in **Fig. 1**.

The stainless steel of the present invention is particularly suitable for oil and gas applications, *i.e.*, in environments presenting high $CO_2$ partial pressure, low pH and high chloride contents. For this environment, the traditional martensitic stainless steels do not present suitable corrosion resistance and, usually, duplex or superduplex stainless steels are selected.

The steel of present invention shows better corrosion resistance when compared to the supermartensitic stainless steels for the same level of mechanical resistance.

Another advantage of the present invention is that the steel do not need to be cold worked in order to increase the mechanical properties, as required by duplex or superduplex stainless steels, being able to be hardened by quenching and tempering heat treatments. Additionally, the lower amount of alloying elements and lower processing complexity make this solution cheaper than the duplex or superduplex stainless steels.

In many cases, the strategy for selection of a duplex or superduplex stainless steel overdesign the need for corrosion resistance and significantly increases the costs of a given project. To solve this problem, the inventors developed a stainless steel having better corrosion resistance than can be achieved by martensitic or supermartensitic stainless steels.

Additionally, when compared with martensitic-ferritic of the state of the art, the steel of present invention has lower tendency to form deleterious phases such as Sigma or $\alpha$' during the tempering thermal cycles, thanks to its lower Cr content.

The martensitic-ferritic of the present invention has lower Cr content and balanced Mo content when compared with those martensitic-ferritic of the state of the art. This different criteria of alloy development has as goal decrease the tendency to form deleterious phases during tempering cycle and, consequently, improve both mechanical properties and corrosion resistance. In the present invention, the martensitic-ferritic stainless steel and its processing were developed in order to improve the corrosion resistance and, consequently, fill this gap in materials selection for this application field.

The present inventors did intensive research on the effect of chemical composition and processing routes (particularly finishing rolling and heat treatment steps) on the corrosion resistance in the previous described environment.

PREN or another parameter based only on the chemical composition cannot, by themselves, define the corrosion resistance in a given environment. Its final microstructure and its chemical composition also play an important role on corrosion behavior. This gives more importance to the process, particularly to finishing steps of hot rolling and to the heat treatment. A comparison between polarization curves in samples from composition A, submitted to two different heat treatments (one based on single and another based on double tempering) are presented in **Fig. 2**. It can be seen in this figure that, even with the same alloy and, consequently, same PREN, the double tempering heat treatment could promote a passive layer, while the heat treatment base in single tempering didn't develop this layer.

In order to measure the effect of its final microstructure and its chemical composition on the corrosion resistance, specific electrochemical tests were used.

Potentiodynamic and potentiostatic polarization techniques were used to investigate pitting and crevice corrosion with relative success for several metals. The potentiodynamic polarization technique has been the preferred technique for determination of pit potential ($E_{pit}$) and crevice potential ($E_{crevice}$) due to its simplicity. However, in some cases, the $E_{pit}$ and $E_{crevice}$ determination are very difficult and without precision due to some technical limitations. The potentiostatic polarization technique, such as Step Potential, is more time consuming than the previous one, but it has been claimed that its results are more reliable and sensitive than the potentiodynamic ones.

One version of the Step Potential corrosion test involves smaller increments in the test potential above the Open Circuit Potential (OCP) and the current is monitored for 1 hour for each step. The process is repeated until the current increases exponentially. For potentials lower than $E_{pit}$ or $E_{crevice}$ the current decreases with time. When the potential achieves the value of $E_{pit}$ or $E_{crevice}$ the current starts to increase with the time. The *"Step Potential"* electrochemical technique was used in order to evaluate the crevice initiation potential.

The tests were carried out in a de-aerated solution with 20,000 ppm of chloride ions and 0.4 g/l of sodium bicarbonate at a pH of 3.3, adjusted with acetic acid. The crevice formers were mounted on both sides of the sample with the disc spring set up and a 5 N/mm$^2$ clapping force was applied. After measuring the open circuit potential during two hours, the potential was increased in steps of 50 mV every one hour and at each step the current variation was recorded as a function of time until the current of 10 mA was attained. The potential level at which the current density is equivalent to 0.1 mA was defined as the crevice initiation potential. After running the test, the sample surface was examined to confirm the presence of crevice attack.

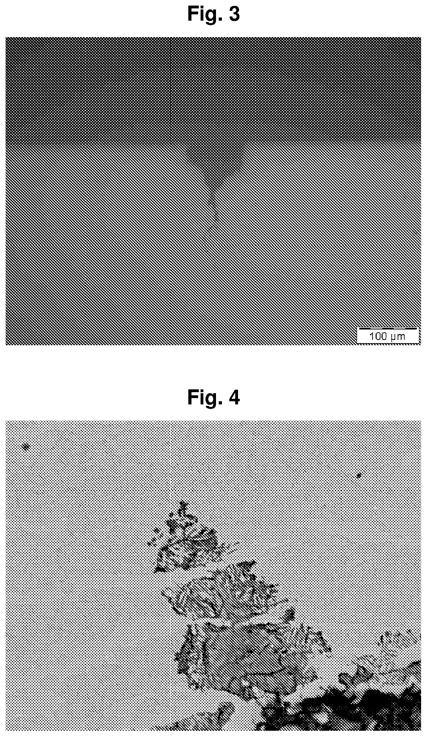

Regarding SSC resistance at room temperature and taking a martensitic stainless steel as reference, it can be seen that the fails are usually associated to a hydrogen crack propagating in the martensite phase. **Fig. 3** shows a crack nucleated under a pit located at the surface of a Super 13Cr (martensitic stainless steel) sample tested in NACE TM 0177-96 Method A. The described test condition is the same applied in the present invention.

The martensitic-ferritic stainless steels of the present invention have a microstructure composed, mainly, by martensite and ferrite, having also a small amount of retained austenite, as shown in Fig. 1. The inventors noticed that the SSC fails, of this steel at room temperature are associated to preferential corrosion instead of hydrogen cracking. Fig. 4 shows a pit nucleated on a SSC sample after test. It can be seen in this figure that advanced corrosion through martensitic phase, depleted of Cr and Mo, and low PREN, preserves the Cr and Mo enriched δ ferrite and higher PREN.

The inventors discloses that, for martensitic-ferritic stainless steel, the way that the main alloying elements such as Cr, Ni, Mo and others (Cu, Ti, Nb, V, N, etc) are distributed in different phases is an important factor for corrosion resistance, particularly the localized corrosion such as pitting and crevice. Materials having dual phase microstructure present more chemical variations between phases than those presenting single phase, such as supermartensitic stainless steel. During processing, at high temperatures, austenite tends to be enriched in Ni while δ ferrite presents more Cr and Mo in its matrix.

The present inventors noticed that the temperatures during processing final step of hot rolling and the reheating for quenching, are very important parameters to control the amount of phases, chemical variations between them and, consequently, the corrosion resistance of the steel.

In the present invention, a Localized Corrosion Parameter (LCP), derived from the difference of PREN between δ ferrite and austenite phases at 1,000°C of the steels presented in Tab. 1, was stated as below:

$$LCP = 0.500 \cdot \%Cr + 1.287 \cdot \%Mo + 1.308 \cdot \%N - 5.984$$

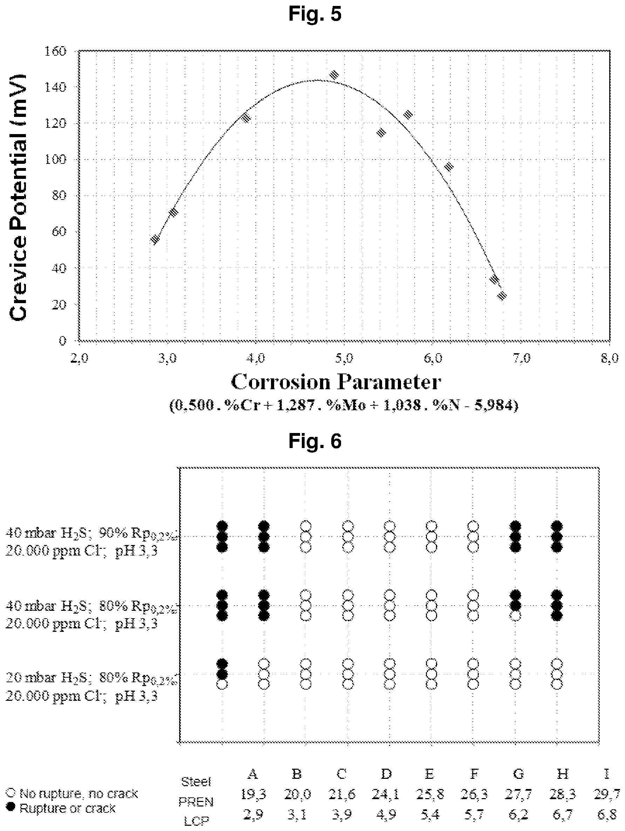

The inventors teach that this parameter measures the susceptibility of localized corrosion in terms of preferential corrosion mechanism observed in the martensitic phase. **Fig. 5** shows the correlation between LCP with crevice potential measured by electrochemical tests earlier described. This figure shows that lower LCP, and also lower alloy PREN, conducts to lower corrosion resistance measured by the crevice potential. However, for higher values of LCP also a low corrosion resistance is found, despite the higher PREN values. This occurs due to the increase in the chemical composition difference between the δ ferrite and martensite phases.

The steel of the present invention was also tested according to NACE TM 0177-96 Method.A in three conditions, as presented below:

- Environment 1: 20,000 ppm Cl$^-$ ; pH 3.3; 20 mbar of $H_2S$ and 80% of specified flow limit;
- Environment 2: 20,000 ppm Cl$^-$ ; pH 3.3; 40 mbar of $H_2S$ and 80% of specified flow limit;
- Environment 3: 20,000 ppm Cl$^-$ ; pH 3.3; 40 mbar of $H_2S$ and 90% of specified flow limit.

The results are presented in Tab. 2 and Fig. 6.

## TABLE 2

| Steel | Microstructure [1] | | Ys (Mpa) | Ts (Mpa) | LCP | Crevice Potential (mV) [2] | NACE TM 0177 Method A [1-4] | | | | | |
|---|---|---|---|---|---|---|---|---|---|---|---|---|
| | | | | | | | Environment 1 | | Environment 2 | | Environment 3 | |
| | Phases | % δ ferrite | | | | | Samples | Final result | Samples | Final result | Samples | Final result |
| A | martensite | ~0 | 699 | 863 | 2.9 | 56 | ○●○ | ▲ | ○○● | ▲ | ○○○ | ▲ |
| B | martensite | ~0 | 737 | 924 | 3.1 | 71 | ○○○ | △ | ●●● | ▲ | ○○○ | ▲ |
| C | martensite + δ ferrite | 12 | 683 | 948 | 3.5 | 123 | ○○○ | △ | ○○○ | △ | ○○○ | △ |
| D | martensite + δ ferrite | 31 | 784 | 960 | 4.9 | 147 | ○○○ | △ | ○○○ | △ | ○○○ | △ |
| E | martensite + δ ferrite | 28 | 698 | 863 | 5.4 | 115 | ○○○ | △ | ○○○ | △ | ○○○ | △ |
| F | martensite + δ ferrite | 30 | 718 | 987 | 5.7 | 125 | ○○○ | △ | ○○○ | △ | ○○○ | △ |
| G | martensite + δ ferrite | 31 | 740 | 1043 | 6.2 | 96 | ○○○ | △ | ○○○ | △ | ○○○ | △ |
| H | martensite + δ ferrite | 39 | 701 | 1013 | 6.7 | 34 | ○○○ | △ | ○●● | ▲ | ●●● | ▲ |
| I | martensite + δ ferrite | 29 | 721 | 1002 | 6.8 | 25 | ○○○ | △ | | ▲ | | ▲ |

[1] Some retained austenite is present in all steels
[2] Average of at least 3 measurements
[3] Sample evaluation: ● Rupture or cracks ○ No rupture, no cracks
[4] Final result: ▲ Reproved △ Approved

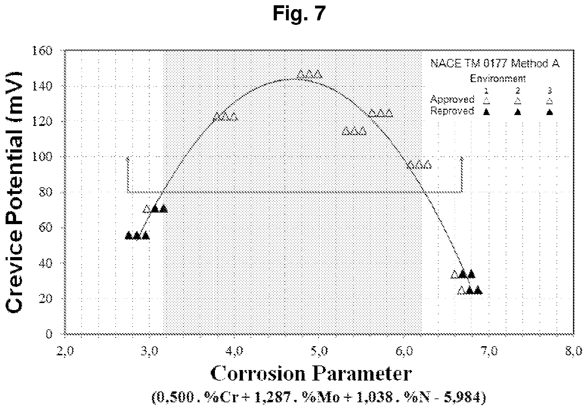

These results correlate well with those obtained from electrochemical tests, since the failure mode is mainly driven by preferential corrosion mechanism measured by LCP. Fig. 7 shows the correlation between LCP, crevice potential and NACE A results. In order to have a suitable corrosion resistance, based on those correlations, a minimum of 80 mV of crevice potential was established. This means that LCP is preferably higher than 3.2 and lower than 6.2 as shown in **Fig. 7**.

In order to achieve the minimum corrosion resistance necessary to the application, the steel of the present invention has the following chemical composition:
C: from 0.005 to 0.030%; . Si: from 0.10 to 0,40%; Mn from 0.20 to 0.80%; P: 0.020% max; S: 0.005% max; Cr: from 13 to 15%; Ni: from 4.0 to 6.0%; Mo: from 2.0 to 4.5%; V: from 0.01 to 0.10%; Nb: from 0.01 to 0.50%; N: from 0.001 to 0.070%; Al: from 0.001 to 0.060%; Ti: from 0.001 to 0.050%; Cu: from 0.01 to 1.50%; W: below 0.05%; O: 0.005% max (all in weight percent), balanced by Fe and unavoidable impurities from the industrial processing in' acceptable levels up to a maximum of 0.20% in total amount. Additionally, the corrosion parameter (LCP) has the value between 3.2 and 6.2. The minimum necessary corrosion resistance for the steel of the present invention is achieved when LCP is 3.2, attributed to the combined necessary chromium and molybdenum contents and the equilibrated distribution of those elements in the microstructure. For LCP values higher than 6.2 the corrosion resistance of the steel becomes hampered by the great variation in chemical composition among the phases, even with higher levels of chromium and molybdenum.

The stainless steel according to the present invention presents flow limit between 655 and 1034 MPa (95 and 150 ksi), being more resistant to corrosion than supermartensitic stainless steel, Super 13Cr. Besides, it is able to support 720h in the NACE TM 0177-96 Method A test in a solution containing 20,000 ppm of Cl⁻, pH3.3 and 4 kPa (40 mbar) of $H_2S$ under tensile of 90% of the minimal specified flow limit.

## BEST WAY TO CARRY OUT THE INVENTION

### 1. CHEMICAL COMPOSITION

For the steel of present invention, a chromium and molybdenum content different from those adopted by the state of the art (lower chromium and balanced molybdenum) was proposed. This new alloy balance has as goal, decrease the amount of deleterious phases, particularly those forming during low temperature heat treatment, such as the tempering cycles, and enhances the corrosion resistance. The low temperature deleterious phases (Sigma, α' or any other) are usually associated to embrittlement of stainless steels that contains ferrite in its microstructure, such as "475°C embrittlement". Besides chromium and molybdenum, other elements play fundamental roles in the final properties of the steel.

Carbon is an important element to increase resistance but is detrimental in terms of corrosion resistance and weldability. In the steel of present invention, the carbon content lower than 0.030% is important to prevent the formation of $M_{23}C_6$ chromium and molybdenum carbide and allows these elements to remain in solution. Then carbon content is kept lower than 0.030% and preferred between 0.005 to 0.015%.

Silicon is a necessary element in steelmaking process since it has the function of deoxidizer. However the detrimental effect on SSC resistance of silicate inclusions formed when Si content is very high. Although silicon content higher than 0.10% is required to reduce the oxygen content to desired levels, silicon content greater than 0.40% may lead to the formation of silicate inclusions decreasing the SSC resistance. In this way, the Silicon content is kept between 0.10 and 0.40%, being preferred between 0.15 and 0.30%.

Manganese in steelmaking process is a deoxidizer and desulphurizing agent. This element in appropriate contents increases the hardness and the resistance and decrease the brittleness of the steel. Manganese contents between 0.20 and 0.80% result in a product with low oxygen content and good corrosion resistance. The manganese content is kept between 0.20 and 0.80%, being preferred between 0.20 and 0.50%.

Phosphorus and sulphur are present in the steel as impurities and reduce the tenacity of the steel. It is desirable to minimize the phosphorus and sulphur contents in the steel, within the industrial feasibility. It is important to keep the Phosphorous and Sulphur contents below 200 ppm and 50 ppm, respectively, in order to maintain a good hot ductility and great SSC corrosion resistance. Phosphorus and Sulphur contents are kept below 0.020% and 0.005%, being preferred below 0.010% and 0.003%, respectively.

Chromium is the element responsible for the formation of passive layer in stainless steel. However, high chromium contents are not desirable due to the precipitation of intermetallic phases which reduce the corrosion resistance of the steel. Chromium contents lower than 15% are preferable in order to avoid intermetallic phase precipitation. Chromium contents lower than 13% result in steels with lower PREN and, consequently, lower corrosion resistance.

On the other hand higher chromium contents results in higher PREN differences between $\delta$ ferrite and austenite. To avoid an increase in the PREN difference between these two phases, and consequently improve corrosion performance, the chromium content is kept between 13.0 and 15.0%, being preferred between 13.5 and 14.5%.

Nickel is an important element to stabilize the austenite phase. With higher nickel contents, more retained austenite can be formed due to decrease of the starting temperature for martensitic transformation (Ms). Nickel contents higher than 6.0% could result in a great amount of retained austenite and nickel contents lower than 4.0% would increase the amount of ferrite, decreasing the corrosion resistance. Then, nickel is kept between 4.0 to 6.0%, being preferred between 4.5 to 5.5%.

Molybdenum is an element that improves localized corrosion and SSC resistance. Molybdenum also stabilizes high temperature intermetallic phases, such as Chi phase. It is very important to have this element in solid solution and avoid its segregation in order to prevent the precipitation of intermetallic phases that reduce the corrosion resistance of the steel and also its tenacity.

The temperature necessary to resolubilize Chi phase is strongly determined by the molybdenum content and, to avoid a high temperature during finishing rolling step or during austenitizing thermal cycle for quenching, molybdenum content is limited in this steel to 4.5% maximum. Therefore, to get a good corrosion resistance and to prevent precipitation of intermetallic phases, the molybdenum content is kept between 2.0 and 4.5%, being preferred between 3.0 and 4.0%.

Vanadium is an element that increases the mechanical resistance of the steel and acts as grain refiner. In the steel of the present invention, however, this hardening mechanism is mainly due to niobium carbonitride precipitation, which acts as a gathering for the carbon avoiding the precipitation of chromium and molybdenum rich carbides and consequently improving the corrosion resistance. The vanadium content in the steel of present invention is kept between 0.01 and 0.10%, being preferred between 0.01 and 0.05%.

Niobium prevents the formation of chromium carbides or chromium nitrides due to its higher chemical affinity for carbon and nitrogen. Consequently, niobium carbonitrides precipitates and leaves more chromium in the matrix to assure the necessary corrosion resistance. On the other hand, higher quantity of niobium carbonitrides makes the mechanical processing difficult since it reduces the hot ductility, increases the austenite resistance, which results in high wear of the tools during seamless tube hot rolling. The niobium content of the steel of present invention is kept between 0.01 and 0.50% being preferred between 0.03 and 0.20%.

The nitrogen increases the mechanical resistance of the steel through solid solution hardening mechanism and nitride and carbonitride precipitation. However, high resistance is usually detrimental to corrosion resistance, especially concerning to SSC resistance. Nitrogen contents lower than 0.070% is desired to improve SSC resistance of the steel. Besides, nitrogen contents have to be linked to niobium contents in order to optimize its precipitation and, consequently, improve mechanical properties trough control of precipitation size distribution.

Although nitrogen in solid solution increases PREN and consequently improves the corrosion resistance, it is not used in the steel of present invention with this purpose. The nitrogen content is kept between 0.001 and 0.070%, being preferred between 0.005 to 0.020%.

Preferably, when the stainless steel of present invention presents Nb content from 0.03 to 0.20%, the N content is from 0.006 to 0.020%. Additionally, when the stainless steel of present invention presents Nb content from 0.20 to 0.50%, the N content from 0.020 to 0.050%

Aluminum is a strong deoxidizer agent which is added to the liquid steel principally to control the oxygen content of the final product, though alumina ($Al_2O_3$) precipitation and flotation. After steelmaking, some residual aluminum remains in solid solution and can also acts as grain growth controller during hot rolling process, through aluminum nitride (AlN) precipitation. Despite the fact this practice is very efficient to reduce the oxygen content, the alumina particles reduce the tenacity and corrosion resistance of the steel and, for this reason, aluminum is kept between 0.001 and 0.060%, being preferred between 0.004 to 0.050%

Titanium is an element that controls grain size and also tends to minimize the occurrence of inter-granular corrosion through a precipitation of the very stable titanium nitride (TiN). Titanium also has a solid solution hardening effect on steels and alloys. For the steel of present invention all those benefits are expected to be supplied by niobium instead of titanium and this explains the limitation of titanium at maximum 0.050%.

This limitation of titanium is also connected with the residual amounts of titanium present in the mainly ferroalloys used in the steel manufacturing process Thus, the titanium content is kept between 0.001 to 0.050%, being preferred between 0.001 to 0.020%.

Copper increases the corrosion resistance of the steel to generalized corrosion mechanism. This mechanism is especially efficient in environments containing $CO_2$ and mixtures $CO_2/H_2S$. The copper is also able to raise the SSC resistance and mechanical resistance of the steel after aging, by precipitation of a very fine dispersion of spherical copper precipitates. However, copper precipitation occurs mainly for high copper contents which are not desired due to the reduction of hot ductility. For this reason, copper contents are limited to 1.50% maximum. For the steel of present invention, copper is kept between 0.01 and 1.50%, being preferred between 0.80 and 1.20%.

Oxygen is an inevitable impurity in the steels, particularly the steels that are melted by electric furnaces and casted without protection. Oxygen content is mainly controlled by the addition of deoxidizers elements such as aluminum, manganese and silicon, in industrial processes.

The refining process of the steels by slag/metal equilibrium is fundamental to reduce the oxygen content and to prevent a re-oxidation of the steel. In order to achieve the best mechanical properties of the steel of the present invention, oxygen must be as low as possible to prevent the excessive oxide precipitation and decrease of the SCC corrosion resistance. The oxygen content for the steel of the present invention is kept lower than 0.005% and preferred below 0.003%.

Boron is an important element to improve the hardenability of the steel. However when added in contents higher than 0.010% its addition becomes detrimental to the hot ductility due to precipitation of borides. For the steel of the present invention, boron content is kept lower than 0.010% being preferred below 0.008%.

Tungsten and cobalt are inevitable impurities which come within the iron alloys used in the industrial steel production. The presence of these elements in the steel of the present invention is always accidental and, for this reason, only their maximum value is controlled. Tungsten and cobalt, when present, have their contents kept below 0.10% and preferentially below 0.05%.

As examples of preferable embodiments of the stainless steel of the present invention, the steel composition as above described can present some elements according to the following ranges:

1 - martensitic-ferritic stainless steel comprising contents of Cr from 13.5 to 14.5%; Mo from 3.0 to 4.0%; Nb from 0.03 to 0.20% and N from 0.006 to 0.020%; and

2 - martensitic-ferritic stainless steel comprising contents of Cr from 13.5 to 14.5%; Mo from 3.0 to 4.0%; Nb from 0.20 to 0.50% and N from 0.020 to 0.050%.

As balance, the steel of the present invention containing the above described elements, presents iron and other inevitable impurities from the steelmaking processing up to a maximum of 0.20% in total amount. These impurities include lead, bismuth, antimony, calcium, cerium, neodymium, zirconium, hafnium, arsenic, samarium, praseodymium, tantalum; sulphur, phosphorous and tin.

The corrosion parameter (LCP), that measures the difference of PREN between austenite and delta ferrite at 1,000°C, is an important rule to optimize the corrosion resistance. For the steel of present invention, LCP is kept between 3.2 and 6.2, preferably between 4.2 and 5.2, where a crevice potential over 130 mV can be observed. The PREN value of the steel of the present invention is preferably above 24, being the PREN defined as *PREN=%Cr+3.3x%Mo+16x%N.*

## 2. MANUFACTURED PRODUCTS

In one embodiment of the present invention, manufactured products are described for oil and gas application, that comprise the martensitic-ferritic stainless steel of the present invention, with a final microstructure composed by $\delta$ ferrite, martensite, retained austenite and worthless amount of deleterious phases such as Chi or Sigma phases; wherein the amount of $\delta$ ferrite ranges from 20 to 50%, the amount of martensite ranges from 50 to 80% and having no more than 15% of retained austenite.

As examples not restricted of the invention, it can be mentioned, as manufactured products, seamless tubes for casings and tubings, fittings, accessories, forged or rolled parts or bars.

## 3. PRODUCTION PROCESS OF FORGED OR ROLLED PARTS OR BARS FROM MARTENSITIC-FERRITIC STAINLESS STEEL

The present invention deals with a process for production of forged or rolled parts or bars of martensitic-ferritic stainless steel, characterized by the fact that it comprises the following steps:

a) production of martensitic-ferritic stainless steel, as defined in one of claims 1 to 13, by melting the chemical elements;

b) casting of material melted in step a);

c) homogenization of the ingot of step b) by heat treatment;

d) hot conformation of the product of step c) by rolling or forging, wherein the processing temperature at the end of this step shall follow the equation below:

$$T_{Proc} - 16.9 * \%Cr - 49.9 * \%Mo > 535;$$

e) optionally, heat treat the product of step d);

The inventors found that the steel of the present invention can be produced by melting in air induction furnace, vacuum induction furnace or electric arc furnace. The selection of process can be done as function of availability, capacity and productivity of each production route.

After melting, the steel shall be casted by conventional or continuous casting. The steel of the present invention also can be produced by alternative processes that involve fragmentation and aggregation as in powder metallurgy.

After casting, the ingots or billets shall be homogenized for a sufficient time at temperature in order to produce a homogenized chemical composition within the acceptable industrial ranges. The preferred heating temperatures are between . 1150 to 1280°C in order to guarantee the adequate microstructure (20 to 50% of $\delta$ ferrite).

The ingots or billets have to be hot formed by rolling or forging process in order to achieve the shape and the desired properties.

The product of the hot forming processes are forged or rolled parts or bars for final applications or for production of seamless tube.

In case of final application the parts or bars shall be heat treated in order to provide the desired properties of the steel of the present invention. The temperature of austenitizing furnace or of final hot forming process shall follow the following equation:

$$T_{Proc} - 16.9 * \%Cr - 49.9 * \%Mo > 535$$

Tempering heat treatment is usually done using a single or double tempering cycle in temperature ranging from 550 to 680°C.

## 4. PROCESS FOR PRODUCTION OF SEAMLESS TUBES

The present invention additionally deals with the process for production of seamless tubes of martensitic-ferritic stainless steel that comprises the following steps:

a) rolling pf the tube that comprises the martensitic-ferritic as defined in one of the claims 1 to 13, followed by a heat treatment, wherein the, heating temperature for the finishing steps shall fullow the equation below:

$$T_{Proc} - 16.9 * \%Cr - 49.9 * \%Mo > 535;$$

b) heat treatment, divided in the following steps

b1) optionally quenching, and, when used, shall follow the heating temperature equation of step a);

b2) single or double tempering, comprising temperatures between 550 to 680°C, directly after rolling or after a thermal cycle of quenching; and

c) air or water cooling, after quenching or tempering.

The process for production for seamless steel tubes is well known by the state of the art, for example, those presented in SOMMER, B. Stahlrohr-Handbuch. 12th ed Vulkan-Verlag, 1995, 857p.

In the case of seamless tube production of the present invention, the inventors found that the important parameters for tube rolling and heat treatment are the temperatures at finishing steps of rolling mill and at quenching cycle. Those temperatures equilibrates the adequate amount of austenite and ferrite and guarantee the dissolution of Chi-phase, eventually formed during transfer between roughing to finishing steps or during final cooling and subsequent heating for quenching. The importance of those temperatures is based on deleterious effect of Chi-phase on corrosion resistance.

Studies conducted by the present inventors in this matter have allowed correlating the dissolution temperature with chemical composition, particularly chromium and molybdenum. From this correlation It was determined the following rule:

$$T_{Proc} - 16,9 * \%Cr - 49,9 * \%Mo > 535$$

Other parameters, besides that, are also very considered to attain the desired properties for the steel of present invention, they are:

A) the billet heating temperature before the roughing steps (as example, from billet piercing to the rolling at a mandrel continuous mill or in a Stiefel-type not reversible duo mill (plug mill)) is kept between 1150 and 1300°C to guarantee the adequate microstructure (20 to 50% of $\delta$ ferrite).

B) direct charging at reheating furnace for finishing steps of tube rolling is preferable to avoid long exposure time in the range of temperature of Chi-phase formation. The cold charging in the finishing steps of tube rolling is allowed but preferably avoided. The finishing steps occur in a roller or stretcher reducing mill or in a calibrator roller. In any case, the temperature for finishing rolling at reheating furnace shall follow the equation:

$$T_{Proc} - 16,9 * \%Cr - 49,9 * \%Mo > 535$$

C) quenching cycle after rolling is optional but, when adopted, the austenitizing temperature for quenching follows the equation:

$$T_{Proc} - 16,9 * \%Cr - 49,9 * \%Mo > 535$$

D) temper after rolling using a single or double tempering cycle in temperature ranging from 550 to 680°C. The inventors discloses that this material can also revert some amount of austenite and produce some fresh martensite after the first tempering cycle above 600°C. In case of tempering cycle above this temperature, a second tempering can be applied to temper the fresh martensite formed from reverted austenite.

E) after first tempering cycle, alternatively, to avoid austenite stabilization, water cooling tempering cycle can be applied.

## 4. MICROSTRUCTURE

The steel of the present invention exhibit a martensitic-ferritic microstructure consisting essentially of martensite, $\delta$ ferrite and some retained austenite. The amount of $\delta$ ferrite is controlled by hot processing, especially hot rolling, ranging from 20 to 50%. The rest of microstructure (~70%) comes from the transformation of austenite into martensite, resulting in martensite with some retained austenite.

Some microalloying carbonitrides can be observed, especially niobium containing ones. **Fig. 1** shows a typical microstructure observed in the steel G of **Tab 1**.

There, the light phase is the $\delta$ ferrite while the darker one is the martensite with some retained austenite.

Despite the fact that $\delta$ ferrite has not been among the preferred microstructure for corrosion resistance alloys, the microstructure found in the steel of the present invention exhibits superior corrosion resistance when compared with low carbon tempered martensite. Consequently, the steel of the present invention has a better performance than a martensitic or supermartensitic stainless steel.

The amount of retained austenite is defined by hot processing during hot rolling or quenching cycle. After cooling in air or water all the austenite is expected to transform in martensite and some retained austenite between laths will remain in the steel. This martensite has to be tempered by single or double tempering cycle since it is thermodynamically expected some reversion, especially if the tempering temperature is above ~600°C. Suitable combination of tempering cycles is necessary to produce mechanical properties between 95 and 150 ksi.

In the steel of the present invention, niobium carbonitride amount can be present, below 0.40% by volume, in order to provide the necessary precipitation hardening to the steel. A minimum of 0.05% by volume is necessary to achieve the desired properties. Preferably, the steel of the present invention comprises a volumetric fraction of niobium carbonitrides between 0.01 and 0.50%.

## EXAMPLES

**Table 1** shows the chemical composition of the steels used in the present invention. The steels A and B are supermartensitic stainless steel. The steels of C to I are variants of the steel concept proposed in the present invention, being the steels C to G within the proposed limits for the corrosion parameters LCP. The steels H and I are within the chemical composition, but the LCP is beyond the limit of 6.2.

TABLE 1

| Steel | C | Si | Mn | P | S | Cr | Ni | Mo | Cu | Al | Ti | V | Nb | N | LCP | PREN |
|---|---|---|---|---|---|---|---|---|---|---|---|---|---|---|---|---|
| A | 0,013 | 0,25 | 0,51 | 0,014 | 0,001 | 12,6 | 5,9 | 2,0 | 0,01 | 0,014 | 0,14 | 0,03 | 0,00 | 0,011 | 2,9 | 19,3 |
| B | 0,020 | 0,22 | 0,59 | 0,015 | 0,003 | 11,9 | 6,1 | 2,4 | 0,02 | 0,016 | 0,15 | 0,03 | 0,01 | 0,010 | 3,1 | 20,0 |
| C | 0,017 | 0,20 | 0,30 | 0,015 | 0,003 | 13,8 | 5,5 | 2,3 | 0,01 | 0,030 | 0,12 | 0,04 | 0,03 | 0,012 | 3,9 | 21,6 |
| D | 0,007 | 0,20 | 0,30 | 0,014 | 0,002 | 14,0 | 4,5 | 3,0 | 0,87 | 0,026 | 0,01 | 0,04 | 0,10 | 0,018 | 4,9 | 24,1 |
| E | 0,016 | 0,20 | 0,29 | 0,014 | 0,001 | 15,0 | 5,0 | 3,0 | 0,90 | 0,026 | 0,01 | 0,05 | 0,49 | 0,062 | 5,4 | 25,8 |
| F | 0,012 | 0,23 | 0,34 | 0,021 | 0,001 | 14,5 | 5,0 | 3,4 | 0,90 | 0,005 | 0,01 | 0,04 | 0,29 | 0,028 | 5,7 | 26,3 |
| G | 0,015 | 0,20 | 0,31 | 0,016 | 0,002 | 14,0 | 5,0 | 4,0 | 0,91 | 0,025 | 0,01 | 0,05 | 0,26 | 0,032 | 6,2 | 27,7 |
| H | 0,025 | 0,20 | 0,30 | 0,015 | 0,003 | 15,3 | 4,0 | 3,9 | 0,90 | 0,030 | 0,01 | 0,04 | 0,07 | 0,007 | 6,7 | 28,3 |
| I | 0,019 | 0,20 | 0,30 | 0,016 | 0,002 | 15,1 | 5,6 | 4,0 | 0,91 | 0,027 | 0,02 | 0,05 | 0,90 | 0,090 | 6,8 | 29,7 |

**Claims**

1. MARTENSITIC-FERRITIC STAINLESS STEEL, **characterized by** the fact that it comprises a martensitic-ferritic microstructure, and a chemical composition in the range of C: from 0.005 to 0.030%; Si: from 0.10 to 0.40%; Mn from 0.20 to 0.80%; P: 0.020% max; S: 0.005% max; Cr: from 13 to 15%; Ni: from 4.0 to 6.0%; Mo: from 2.0 to 4.5%; V: from 0.01 to 0.10%; Nb: from 0.01 to 0.50%; N: from 0.001 to 0.070%; Al: from 0.001 to 0.060%; Ti: from 0.001 to 0.050%; Cu: from 0.01 to 1.50%; W: below 0.05%, O: 0.005% max (in weight percent), wherein the balance is performed by Fe and unavoidable impurities from the industrial processing in acceptable levels up to a maximum of 0.20% in total amount and having the localized corrosion parameter (LCP) between 3.2 and 6.2, defined by the equation below:

$$LCP = 0.500 \cdot \%Cr + 1.287 \cdot \%Mo + 1.308 \cdot \%N - 5.984.$$

2. MARTENSITIC-FERRITIC STAINLESS STEEL, according to the claim 1, **characterized by** the fact that it comprises a C content from 0.005 to 0.015%.

3. MARTENSITIC-FERRITIC STAINLESS STEEL, according to one of claims 1 to 2, **characterized by** the fact that it comprises a Cr content from 13.5 to 14.5%.

4. MARTENSITIC-FERRITIC STAINLESS STEEL, according to one of claims 1 to 3, **characterized by** the fact that it comprises a Ni content from 4.5 to 5.5%.

5. MARTENSITIC-FERRITIC STAINLESS STEEL, according to one of claims 1 to 4, **characterized by** the fact that it comprises a Mo content from 3.0 to 4.0%.

6. MARTENSITIC-FERRITIC STAINLESS STEEL, according to one of claims 1 to 5, **characterized by** the fact that it comprises a Nb content from 0.03 to 0.20% and N content from 0.006 to 0.020%.

7. MARTENSITIC-FERRITIC STAINLESS STEEL, according to one of claims 1 to 5, **characterized by** the fact that it comprises a Nb content from 0.20 to 0.50% and N content from 0.020 to 0.050%.

8. MARTENSITIC-FERRITIC STAINLESS STEEL, according to one of claims 1 to 7, **characterized by** the fact that it comprises a Cu content from 0.8 to 1.2%.

9. MARTENSITIC-FERRITIC STAINLESS STEEL, according to one of claims 1, 2, 4 and 8, **characterized by** the fact that it comprises a Cr content from 13.5 to 14.5%; Mo content from 3.0 to 4.0%; Nb content from 0.03 to 0.20% and N content from 0.006 to 0.020%.

10. MARTENSITIC-FERRITIC STAINLESS STEEL, according to one of claims 1, 2, 4 and 8, **characterized by** the fact that it comprises a Cr content from 13.5 to 14.5%; Mo content from 3.0 to 4.0%; Nb content from 0.20 to 0.50 % and N content from 0.020 to 0.050%.

11. MARTENSITIC-FERRITIC STAINLESS STEEL, according to one of claims 1 to 10, **characterized by** the fact that it comprises a volumetric fraction of niobium carbonitride between 0,01 and 0,50%.

12. MARTENSITIC-FERRITIC STAINLESS STEEL, according to one of claims 1 to 11, **characterized by** the fact that it comprises a LCP between 4.2 and 5.2.

13. MARTENSITIC-FERRITIC STAINLESS STEEL, according to one of claims 1 to 12, **characterized by** the fact that it comprises a Pitting Resistance Equivalent Number (PREN) over 24, wherein PREN is defined by PREN=%Cr+3.3%Mo+ 16%N.

14. MARTENSITIC-FERRITIC STAINLESS STEEL, according to one of claims 1 to 13, **characterized by** the fact that it comprises B in content below 0.010%, preferentially below 0.008%.

15. MARTENSITIC-FERRITIC STAINLESS STEEL, according to one of claims 1 to 14, **characterized by** the fact that it comprises Co in content below 0.05%.

16. MANUFACTURED PRODUCT, for oil and gas application, **characterized by** the fact that it comprises the martensitic-ferritic stainless steel, as defined in one of claims 1 to 15, having a final microstructure composed by $\delta$ ferrite, martensite, retained austenite and worthless amounts of deleterious phases such as Chi or Sigma; wherein the amount of $\delta$ ferrite ranges from 20 to 50%, the amount of martensite ranges from 50 to 80% and have no more than 15% of retained austenite.

17. MANUFACTURED PRODUCT, according to claim 16, **characterized by** the fact of being seamless tube, fittings, accessories, forged or rolled parts or bars.

18. MANUFACTURED PRODUCT, according to one of claims 16 to 17, **characterized by** the fact of being seamless tube for casing.

19. MANUFACTURED PRODUCT, according to one of claims 16 to 18, **characterized by** the fact of being seamless tube for tubings.

20. PROCESS FOR PRODUCTION OF SEAMLESS TUBE OF MARTENSITIC-FERRITIC STAINLESS STEEL, **characterized by** the fact that it comprises the following steps:

   a) rolling of the tube that comprises the martensitic-ferritic stainless steel, as defined in one of claims 1 to 15, followed by a heat treatment, wherein the heating temperature for the finishing steps shall follow the equation below:

$$T_{proc} - 16.9 * \%Cr - 49.9 * \%Mo > 535;$$

   b) heat treatment, divided in the following sub steps:

   b1) optionally quenching, and, when present, shall follow the heating temperature equation of step a);
   b2) single or double tempering, comprising temperatures between 550 and 680°C, directly after rolling or after a thermal cycle of quenching; and

   c) air or water cooling after quenching or tempering.

21. PROCESS, according to claim 20, **characterized by** the fact that the rolling is performed in a mandrel continuous mill or in a Stiefel-type not reversible duo mill (plug mill).

22. PROCESS, according to one of claims 20 to 21, **characterized by** the fact that the tube rolling can be done using direct or cold charging for the finishing rolling.

**Patentansprüche**

1. MARTENSITISCH-FERRITISCHER ROSTFREIER STAHL, **dadurch gekennzeichnet, dass** er eine martensitischferritische Mikrostruktur und eine chemische Zusammensetzung in dem Bereich von C: von 0,005 bis 0,030 %; Si: von 0,10 bis 0,40 %; Mn von 0,20 bis 0,80 %; P: 0,020 % max.; S: 0,005 % max.; Cr: von 13 bis 15 %; Ni: von 4,0 bis 6,0 %; Mo: von 2,0 bis 4,5 %; V: von 0,01 bis 0,10 %; Nb: von 0,01 bis 0,50 %; N: von 0,001 bis 0,070 %; Al: von 0,001 bis 0,060 %; Ti: von 0,001 bis 0,050 %; Cu: von 0,01 bis 1,50 %; W: unter 0,05 %; O: 0,005 % max. (in Gewichtsprozent) aufweist, wobei es sich bei dem Rest um Fe und unvermeidbare Verunreinigungen aus der industriellen Verarbeitung und annehmbaren Mengen bis zu höchstens insgesamt 0,20 % handelt, und dass er einen lokalen Korrosionsparameter (Localized Corrosion Parameter, LCP) von zwischen 3,2 und 6,2 aufweist, der durch die nachstehende Gleichung definiert ist:

$$LCP = 0,500 \cdot \%Cr + 1,287 \cdot \%Mo + 1,308 \cdot \%N - 5,984.$$

2. MARTENSITISCH-FERRITISCHER ROSTFREIER STAHL gemäß Anspruch 1, **dadurch gekennzeichnet, dass** er einen C-Gehalt von 0,005 bis 0,015 % aufweist.

3. MARTENSITISCH-FERRITISCHER ROSTFREIER STAHL gemäß einem der Ansprüche 1 oder 2, **dadurch gekennzeichnet, dass** er einen Cr-Gehalt von 13,5 bis 14,5 % aufweist.

4. MARTENSITISCH-FERRITISCHER ROSTFREIER STAHL gemäß einem der Ansprüche 1 bis 3, **dadurch gekennzeichnet, dass** er einen Ni-Gehalt von 4,5 bis 5,5 % aufweist.

5. MARTENSITISCH-FERRITISCHER ROSTFREIER STAHL gemäß einem der Ansprüche 1 bis 4, **dadurch gekennzeichnet, dass** er einen Mo-Gehalt von 3,0 bis 4,0 % aufweist.

6. MARTENSITISCH-FERRITISCHER ROSTFREIER STAHL gemäß einem der Ansprüche 1 bis 5, **dadurch gekennzeichnet, dass** er einen Nb-Gehalt von 0,03 bis 0,20 % und einen N-Gehalt von 0,006 bis 0,020 % aufweist.

7. MARTENSITISCH-FERRITISCHER ROSTFREIER STAHL gemäß einem der Ansprüche 1 bis 5, **dadurch gekennzeichnet, dass** er einen Nb-Gehalt von 0,20 bis 0,50 % und einen N-Gehalt von 0,020 bis 0,050 % aufweist.

8. MARTENSITISCH-FERRITISCHER ROSTFREIER STAHL gemäß einem der Ansprüche 1 bis 7, **dadurch gekennzeichnet, dass** er einen Cu-Gehalt von 0,8 bis 1,2 % aufweist.

9. MARTENSITISCH-FERRITISCHER ROSTFREIER STAHL gemäß einem der Ansprüche 1, 2, 4 und 8, **dadurch gekennzeichnet, dass** er einen Cr-Gehalt von 13,5 bis 14,5 %; einen Mo-Gehalt von 3,0 bis 4,0 %; einen Nb-Gehalt von 0,03 bis 0,20 % und einen N-Gehalt von 0,006 bis 0,020 % aufweist.

10. MARTENSITISCH-FERRITISCHER ROSTFREIER STAHL gemäß einem der Ansprüche 1, 2, 4 und 8, **dadurch gekennzeichnet, dass** er einen Cr-Gehalt von 13,5 bis 14,5 %; einen Mo-Gehalt von 3,0 bis 4,0 %; einen Nb-Gehalt von 0,20 bis 0,50 % und einen N-Gehalt von 0,020 bis 0,050 % aufweist.

11. MARTENSITISCH-FERRITISCHER ROSTFREIER STAHL gemäß einem der Ansprüche 1 bis 10, **dadurch gekennzeichnet, dass** er einen Volumenanteil an Niobcarbonitrid von zwischen 0,01 und 0,50 % aufweist.

12. MARTENSITISCH-FERRITISCHER ROSTFREIER STAHL gemäß einem der Ansprüche 1 bis 11, **dadurch gekennzeichnet, dass** er einen LCP zwischen 4,2 und 5,2 aufweist.

13. MARTENSITISCH-FERRITISCHER ROSTFREIER STAHL gemäß einem der Ansprüche 1 bis 12, **dadurch gekennzeichnet, dass** er eine äquivalente Lochfraßbeständigkeiszahl (Pitting Resistance Equivalent Number, PREN) von größer als 24 aufweist, wobei PREN durch PREN = %Cr + 3,3%Mo + 16%N definiert ist.

14. MARTENSITISCH-FERRITISCHER ROSTFREIER STAHL gemäß einem der Ansprüche 1 bis 13, **dadurch gekennzeichnet, dass** er B in einem Gehalt von unter 0,010 %, vorzugsweise unter 0,008 %, umfasst.

15. MARTENSITISCH-FERRITISCHER ROSTFREIER STAHL gemäß einem der Ansprüche 1 bis 14, **dadurch gekennzeichnet, dass** er Co in einem Gehalt von unter 0,05 % umfasst.

16. FERTIGUNGSERZEUGNIS zur Öl- und Gasanwendung, **dadurch gekennzeichnet, dass** es den martensitischferritischen rostfreien Stahl gemäß einem der Ansprüche 1 bis 15 umfasst, mit einer End-Mikrostruktur bestehend aus δ-Ferrit, Martensit, Restaustenit und bedeutungslosen Mengen von nachteiligen Phasen wie Chi und Sigma; wobei die Menge an δ-Ferrit in dem Bereich von 20 bis 50 % liegt, die Menge an Martensit in dem Bereich von 50 bis 80 % liegt und nicht mehr als 15 % Restaustenit vorliegen.

17. FERTIGUNGSERZEUGNIS gemäß Anspruch 16, **dadurch gekennzeichnet, dass** es sich dabei um ein nahtloses Rohr, Fittings, Zubehörteile, geschmiedete oder gewalzte Teile oder Stangen handelt.

18. FERTIGUNGSERZEUGNIS gemäß einem der Ansprüche 16 bis 17, **dadurch gekennzeichnet, dass** es ein nahtloses Rohr zur Ummantelung ist.

19. FERTIGUNGSERZEUGNIS gemäß einem der Ansprüche 16 bis 18, **dadurch gekennzeichnet, dass** es ein nahtloses Rohr für Rohrleitungen ist.

20. VERFAHREN ZUR HERSTELLUNG EINES NAHTLOSEN ROHRS AUS MARTENSITISCH-FERRITISCHEM ROSTFREIEM STAHL, **dadurch gekennzeichnet, dass** es folgende Schritte umfasst:

a) Walzen des Rohrs, das den martensitischferritischen rostfreien Stahl gemäß einem der Ansprüche 1 bis 15 umfasst, gefolgt von einer Wärmebehandlung, wobei die Wärmetemperatur für die Fertigstellungsschritte der nachstehenden Gleichung entsprechen soll:

$$Tproc - 16,9 * \%Cr - 49,9 * \%Mo > 535;$$

b) Wärmebehandlung, aufgeteilt in die folgenden Teilschritte:

b1) gegebenenfalls Abschrecken, falls zutreffend entsprechend der Wärmetemperaturgleichung von Schritt a);
b2) einfaches oder doppeltes Tempern, umfassend Temperaturen zwischen 550 und 680 °C, direkt nach dem Walzen oder nach einem Wärmezyklus mit Abschrecken; und

c) Luft- oder Wasserkühlen nach dem Abschrecken oder Tempern.

21. VERFAHREN gemäß Anspruch 20, **dadurch gekennzeichnet, dass** das Walzen in einem kontinuierlichen Dorn-Walzwerk oder einem nichtreversiblen Duo-Walzwerk vom Stiefel-Typ (Plug Mill) durchgeführt wird.

22. VERFAHREN gemäß einem der Ansprüche 20 bis 21, **dadurch gekennzeichnet, dass** das Rohrwalzen mit direktem oder kaltem Beladen für das Endwalzen durchgeführt werden kann.

## Revendications

1. Acier inoxydable martensitique-ferritique, **caractérisé en ce qu'**il comprend une microstructure martensitique-ferritique, et une composition chimique dans la plage de C : allant de 0,005 à 0,030 % ; Si : allant de 0,10 à 0,40 % ; Mn allant de 0,20 à 0,80 % ; P : au maximum 0,020 % ; S : au maximum 0,005 % ; Cr : de 13 à 15 % ; Ni : de 4,0 à 6,0 % ; Mo : de 2,0 à 4,5 % ; V : de 0,01 à 0,10 % ; Nb : de 0,01 à 0,50 % ; N : de 0,001 à 0,070 % ; Al : de 0,001 à 0,060 % ; Ti : de 0,001 à 0,050 % ; Cu : de 0,01 à 1,50 % ; W : inférieur à 0,05 %, O : au maximum 0,005 % (en pourcentage de poids), le reste étant constitué de Fe et des impuretés inévitables liées au traitement industriel, à des niveaux acceptables allant jusqu'à 0,20 % au maximum de la quantité totale, et présentant le paramètre de corrosion localisée (LCP) compris entre 3,2 et 6,2, défini par l'équation suivante :

$$LCP = 0,500 \cdot \%Cr + 1,287 \cdot \%Mo + 1,308 \cdot \%N - 5,984.$$

2. Acier inoxydable martensitique-ferritique selon la revendication 1, **caractérisé en ce qu'**il comprend une teneur en C allant de 0,005 à 0,015 %.

3. Acier inoxydable martensitique-ferritique selon l'une des revendications 1 à 2, **caractérisé en ce qu'**il comprend une teneur en Cr allant de 13,5 à 14,5 %.

4. Acier inoxydable martensitique-ferritique selon l'une des revendications 1 à 3, **caractérisé en ce qu'**il comprend une teneur en Ni allant de 4,5 à 5,5 %.

5. Acier inoxydable martensitique-ferritique selon l'une des revendications 1 à 4, **caractérisé en ce qu'**il comprend une teneur en Mo allant de 3,0 à 4,0 %.

6. Acier inoxydable martensitique-ferritique selon l'une des revendications 1 à 5, **caractérisé en ce qu'**il comprend une teneur en Nb allant de 0,03 à 0,20 % et une teneur en N allant de 0,006 à 0,020 %.

7. Acier inoxydable martensitique-ferritique selon l'une des revendications 1 à 5, **caractérisé en ce qu'**il comprend une teneur en Nb allant de 0,20 à 0,50 % et une teneur en N allant de 0,020 à 0,050 %.

8. Acier inoxydable martensitique-ferritique selon l'une des revendications 1 à 7, **caractérisé en ce qu'**il comprend une teneur en Cu allant de 0,8 à 1,2 %.

9. Acier inoxydable martensitique-ferritique selon l'une des revendications 1, 2, 4 et 8, **caractérisé en ce qu'**il comprend une teneur en Cr allant de 13,5 à 14,5 % ; une teneur en Mo allant de 3,0 à 4,0 % ; une teneur en Nb allant de 0,03 à 0,20 % et une teneur en N allant de 0,006 à 0,020 %.

10. Acier inoxydable martensitique-ferritique selon l'une des revendications 1, 2, 4 et 8, **caractérisé en ce qu'**il comprend une teneur en Cr allant de 13,5 à 14,5 % ; une teneur en Mo allant de 3,0 à 4,0 % ; une teneur en Nb allant de 0,20 à 0,50 % et une teneur en N allant de 0,020 à 0,050 %.

11. Acier inoxydable martensitique-ferritique selon l'une des revendications 1 à 10, **caractérisé en ce qu'**il comprend une fraction volumétrique de carbonitrure de niobium qui est comprise entre 0,01 et 0,50 %.

12. Acier inoxydable martensitique-ferritique selon l'une des revendications 1 à 11, **caractérisé en ce qu'**il comprend un LCP compris entre 4,2 et 5,2.

13. Acier inoxydable martensitique-ferritique selon l'une des revendications 1 à 12, **caractérisé en ce qu'**il comprend un nombre équivalent de résistance aux piqûres (PREN) supérieur à 24, où PREN est défini par PREN = %Cr + 3,3 %Mo + 16 %N.

14. Acier inoxydable martensitique-ferritique selon l'une des revendications 1 à 13, **caractérisé en ce qu'**il comprend B en une teneur inférieure à 0,010 %, de préférence inférieure à 0,008 %.

15. Acier inoxydable martensitique-ferritique selon l'une des revendications 1 à 14, **caractérisé en ce qu'**il comprend Co en une teneur inférieure à 0,05 %.

16. Produit manufacturé, destiné à des applications dans le domaine du pétrole et du gaz, **caractérisé en ce qu'**il comprend l'acier inoxydable martensitique-ferritique tel que défini dans l'une des revendications 1 à 15, présentant une microstructure finale composée de ferrite δ, de martensite, d'austénite résiduelle et de quantités négligeables de phases nuisibles, telles que chi ou sigma, dans lequel la quantité de ferrite δ se situe dans la plage allant de 20 à 50 %, la quantité de martensite se situe dans la plage allant de 50 à 80 %, et qu'elle ne comporte pas plus de 15 % d'austénite résiduelle.

17. Produit manufacturé selon la revendication 16, **caractérisé en ce qu'**il s'agit de tubes sans soudures, de raccords, d'accessoires, de pièces ou de barres forgées ou laminées.

18. Produit manufacturé selon l'une des revendications 16 à 17, **caractérisé en ce qu'**il s'agit de tubes sans soudures destinés à des tubages.

19. Produit manufacturé selon l'une des revendications 16 à 18, **caractérisé en ce qu'**il s'agit de tubes sans soudures destinés à des tubes de production.

20. Procédé de fabrication de tubes sans soudures en acier inoxydable martensitique-ferritique, **caractérisé en ce qu'**il comprend les étapes suivantes :

a) laminage du tube qui comprend l'acier inoxydable martensitique-ferritique tel que défini dans l'une des revendications 1 à 15, suivi d'un traitement thermique, la température de chauffage pour l'étape de finissage devant suivre l'équation ci-après :

$$Tproc - 16{,}9 \, ^* \, \%Cr - 49{,}9 \, ^* \, \%Mo > 535 \; ;$$

b) traitement thermique, divisé en les sous-étapes suivantes :

b1) trempe facultative et, si elle est effectuée, elle devra suivre l'équation de température de chauffage de l'étape a) ;
b2) revenu simple ou double, à des températures situées entre 550 et 680 °C, directement après le laminage ou après un cycle thermique de trempe ; et

c) refroidissement à l'air ou à l'eau, après la trempe ou le revenu.

21. Procédé selon la revendication 20, **caractérisé en ce que** le laminage est réalisé dans un laminoir continu à mandrin ou dans un laminoir duo non réversible de type Stiefel (laminoir à mandrin).

22. Procédé selon l'une des revendications 20 à 21, **caractérisé en ce que** le laminage de tubes peut être réalisé en utilisant le chargement direct ou à froid pour le laminage de finissage.

**Fig. 1**

**Fig. 2**

## Fig. 3

## Fig. 4

## Fig. 5

Corrosion Parameter

(0,500 . %Cr + 1,287 . %Mo + 1,038 . %N - 5,984)

## Fig. 6

| Steel | A | B | C | D | E | F | G | H | I |
|-------|------|------|------|------|------|------|------|------|------|
| PREN | 19,3 | 20,0 | 21,6 | 24,1 | 25,8 | 26,3 | 27,7 | 28,3 | 29,7 |
| LCP | 2,9 | 3,1 | 3,9 | 4,9 | 5,4 | 5,7 | 6,2 | 6,7 | 6,8 |

○ No rupture, no crack
● Rupture or crack

## Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5496421 A
- US 5944921 A
- US 7662244 B
- US 7361236 B
- US 8157930 B
- US 20080213120 A
- US 7767039 B
- US 20090162239 A
- US 7767037 B
- US 7862666 B
- US 20110014083 A
- US 20110226378 A
- US 20120031530 A
- WO 2013161089 A

### Non-patent literature cited in the description

- **SOMMER, B.** Stahlrohr-Handbuch. Vulkan-Verlag, 1995, 857